# EUROPEAN PATENT SPECIFICATION

(11) **EP 0 651 404 B1**
(45) Date of publication and mention of the grant of the patent: **02.01.1997**
(21) Application number: 94117148.0
(22) Date of filing: 29.10.1994
(51) Int. Cl.: H01F 38/00, H01F 38/14, H02J 7/00

(54) **Internal cooling of electric automobile charging transformer**
Innenkühlungssystem eines zum Laden eines elektrischen Fahrzeugs geeigneten Transformators
Refroidissement interne de transformation chargeur de véhicule automobile électrique

(30) Priority: 02.11.1993 US 146762
(43) Date of publication of application: 03.05.1995
(73) Proprietor: Hughes Aircraft Company, Los Angeles, California 90045-0066 (US)
(72) Inventor: Quon, William, Alhambra, CA 91803 (US); Tanzer, Herbert J., Topanga, CA 90290 (US)
(74) Representative: Otten, Hajo, Dr.-Ing.

(56) References cited:
- EP-A- 0 552 737
- EP-A- 0 552 738
- DE-A- 4 114 576
- FR-A- 1 538 044

## Description

The invention relates to an automobile charging transformer comprising a transformer primary inductive charge coupler for attachment to a fixed alternating current power supply, said coupler having a primary electric winding, a transformer secondary inductive charge receptacle for mounting in the automobile to charge the battery of the automobile, said transformer secondary inductive charge receptacle being sized to receive said coupler, a transformer secondary winding arranged adjacent said coupler, and a magnetic core associated with said primary electric winding and said secondary electric winding to complete the magnetic circuit through said primary and secondary windings when said coupler is in said receptacle, said transformer primary inductive charge coupler being separable from said transformer secondary inductive charge receptacle so that the automobile can depart from the fixed power supply.

The invention relates further to an electric automobile having an electric propulsion motor and an electric battery connected to energize said propulsion motor and charging means for said battery so that said battery can be charged from a fixed power source being connected to a transformer primary inductive charge coupler having at least one transformer primary coil therein, said automobile comprising a transformer secondary inductive charge receptacle mounted on said automobile, said receptacle being sized such that said coupler can be fitted within said receptacle, an annular transformer secondary coil on at least one side of said receptacle so that said primary coil lies adjacent said secondary coil when said coupler is fitted within said receptacle, and magnetic core material associated with said primary and secondary coils to complete a magnetic circuit through said coils so that said coils are magnetically coupled when said inductive charge coupler is positioned within said inductive charge receptacle.

Such an automobile charging transformer and such an electric automobile are known from EP-A-0 552 737.

Generally, the electric automobile battery is charged from an external source through a magnetic coupling comprising a transformer. The transformer secondary inductive charge receptacle is on the automobile.

In order to reduce air pollution, there is a modern trend toward electrically powered automobiles. These electrically powered automobiles have rechargeable batteries therein. In each vehicle, the power of the batteries is used to propel the automobile and to provide for other power needs thereof. The design of such a vehicle is a careful balance between payload, performance, range between charging, acceleration, and speed. No matter what the combination of these criteria, there is need to recharge the batteries periodically so that the automobile may be taken on another excursion. With fairly large battery capacity, there is need to recharge at a substantial amount of power. Since the time when an automobile is unavailable should be minimized, high charging rates are desirable. If an ordinary plug is to be used, the plug must be suited for high power, which brings about a risk of harm to the operator and/or other people in the vicinity from contact with parts of the electrical supply system.

It is, thus, desirable to make a coupling between the charging station and the automobile which does not require the direct transfer of electricity. A magnetic coupling is desirable. In accordance with this invention, an inductive charge coupler can be manually handled and inserted in an appropriate inductive charge receptacle slot in the automobile. The inductive charge coupler contains a transformer primary and contains an appropriate magnetic conductor. The inductive charge receptacle on the automobile contains the secondary winding(s) together with the rest of the magnetic core. The transformer secondary receptacle in the automobile is connected through appropriate electrical equipment to the battery for the charging thereof.

The frequency is preferably much higher than the ordinary power line frequency, and high charge rates are above 10 kilowatts.

Further, a method for cooling transformers and battery charging devices or other heat generating power supply devices enclosed in housings is known from DE-A-4 114 576. Heat pipes are arranged within the housing of the device and transfer the heat to a main cooling element. To this purpose, each heat pipe is filled with a cooling liquid under vacuum. If the temperature rises above 30 to 50°C, the cooling liquid becomes gazeous, rises up within the heat pipes, is condensed at the main cooling element and flows back as liquid.

Further, a cooled transformer is known from FR-A-1 538 044. Cooling pipes are arranged in loops adjacent to the transformer coils. The cooling medium is water.

These known cooled transformers, however, are not suitable to be used as a charging transformer for electric automobiles, as the primary coil thereof cannot be separated from the secondary coil.

It is the object of the invention to provide an improved automobile charging transformer and an improved electric vehicle, allowing for high charge rates without increasing the weight of the automobile.

This object is achieved by an automobile charging transformer, mentioned at the outset, wherein a heat exchanger is provided adjacent said secondary winding, said heat exchanger having a fluid passage therethrough and having connections for passing cooling fluid therethrough.

The object is further achieved by an electric automobile, mentioned at the outset, wherein a heat exchanger lies against said transformer secondary coil on the side thereof away from said receptacle, said heat exchanger being formed of a plurality of partially annular portions, a heat exchanger fluid inlet and a heat exchanger fluid outlet on each of said portions so that said heat exchanger fluid can be circulated through each of said portions.

The result of the high charge rates, mentioned above, is that there are losses in the coupling system that result in heat. The amount of heat dissipated from the transformer coils, magnetic core and other electronics contained within the inductively coupled connector transformer container can exceed 50 watts. It is, therefore, advantageous to cool the entire inductive charge transformer so that its internal temperatures do not exceed the operating range of the materials used in the connector housing.

In order to aid in the understanding of this invention, it can be stated in essentially summary form that it is directed to cooling of the secondary winding in the inductive charge receptacle of an electric automobile charging transformer by placing a circulating fluid heat exchanger adjacent the secondary winding and removing the heat from the vicinity of the secondary winding by means of circulating fluid.

It is, thus, a purpose and advantage of this invention to provide a system for automobile battery charging which includes a transformer having a separable and cooled primary inductive charge coupler so that the primary may be energized from a stationary source and inserted into the transformer inductive charge receptacle to energize the magnetic circuit therein and the electrical secondary circuit therein.

It is another purpose and advantage of this invention to provide a cooled inductive charge receptacle secondary of an electric automobile charging transformer by placing a fluid heat exchanger adjacent to the secondary winding in order to remove the heat away from the vicinity of the secondary winding.

It is a further purpose and advantage of this invention to provide a high-performance inductive charge coupling transformer which transfers a large amount of energy so that magnetic coupling from a power source to an automobile can be accomplished without the need for a direct contact electric plug-in to achieve safety to persons involved in the charging process.

It is a further purpose and advantage of this invention to provide a high-performance inductive charge coupler transformer which is capable of transferring a substantial amount of energy within the transformer, and to cool the secondary winding structure thereof with a circulating fluid heat exchanger so that the transformer is of minimum weight to maximize automobile performance.

It is a further purpose and advantage of this invention to provide a separable automobile battery charging transformer, a portion of which remains on the automobile and a portion of which is separable therefrom so as to be permanently connected to a power supply. The portion permanently installed in the automobile is provided with cooling, which also acts to cool the separable portion.

Other purposes and advantages of this invention will become apparent from a study of the following portion of the specification, the claims and the attached drawings wherein:

FIG. 1 is a perspective view of an electric automobile adjacent a charging station, in accordance with this invention.

FIG. 2 is an exploded isometric view of the electric automobile charging transformer, showing the relationship of the parts.

Automobile 10 is an automotive vehicle configured for the transportation of a few people and a small amount of baggage. It carries traction batteries which power motors which are connected to the road wheels. Suitable electrical and mechanical controls are provided to control the speed and direction of the vehicle. The onboard battery must be recharged periodically. In the system in accordance with this invention, charging power comes from a fixed power source 12 which is located adjacent the position where the automobile 10 will be parked. In the present illustration, the automobile 10 is parked on a driveway 14. A fixed power source 12 may also be located adjacent to the parking position of the automobile when the owner is working or shopping.

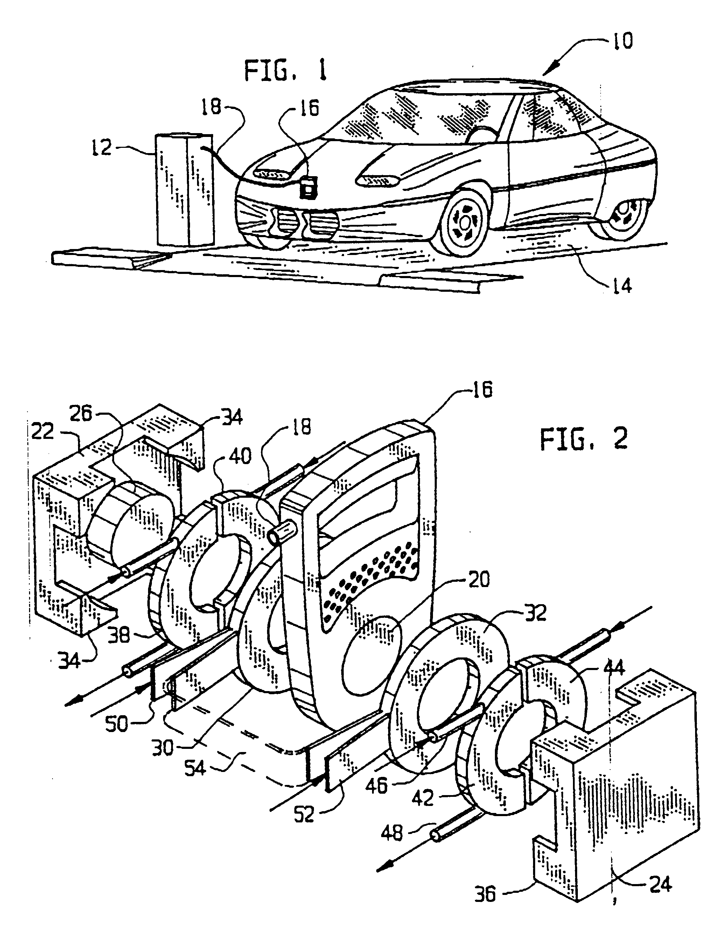

It is presupposed by this invention that the automobile will not be directly powered from the power source 12 by means of a direct plug-in, but the charging connection will be inductive. A transformer is designed to receive power from the power source 12 and to deliver the power through magnetic coupling to a transformer secondary coil in the automobile. The secondary coil is appropriately connected to charge the automobile batteries. The power supply frequency is chosen in connection with the overall power supply parameters, including the transformer parameters. Inductive charge coupler 16, seen plugged into the inductive charge receptacle on automobile 10 in FIG. 1 and seen in exploded isometric view in FIG. 2, is connected to the fixed power source by means of cable 18. The cable 18 incorporates the electrical cable, cooling tubes (if necessary), and control circuitry.

Inductive charge coupler 16 has a "puck"-shaped primary magnetic core 20 which mates with secondary magnetic cores 22 and 24. The secondary cores have circular central plugs, one of which is seen at 26, which match the circular primary magnetic core 20. This is best seen in FIG. 2 where the central plug 26 is depicted. The primary winding surrounds the primary core 20. The secondary windings 30 and 32 surround their respective plugs 26 and lie against the primary winding in coupler 16. The magnetic circuit is completed around the outside of these windings by means of magnetic core fingers, such as fingers 34 and 36. When the secondary is assembled, these fingers lie in face-to-face contact. The primary and secondary coils also lie in face-to-face contact. The use of two secondary coils enhances efficiency.

In order to cool the transformer, and in particular the secondary coils, the extraction of heat is provided for. Heat exchangers 38, 40, 42 and 44 are positioned directly within the transformer and lie against the secondaries. It is seen in FIG. 2, the heat exchangers 38-44 are each half of an annulus. The heat exchanger 42 cooperates with the heat exchanger 44 to surround the plug corresponding to plug 26 in the core 24. The heat exchangers 42 and 44 lie directly against the core 24 and lie directly against the secondary winding 32. Each of the heat exchangers is half of a right circular tubular annulus to match the shape of the secondary winding with which it is associated. Each of the heat exchangers has a fluid inlet and a fluid outlet. The fluid inlet 46 and fluid outlet 48 for the heat exchanger 42 are seen in FIG. 2. Each of the heat exchanger inlets and outlets is connected to a suitable source of cooling fluid so that the heat is carried away.

Within each heat exchanger there is preferably a series of extended heat exchange surface members, such as fins or pins, to enhance heat exchange from the body of the heat exchanger to the fluid circulating thereto. The heat exchangers are in the form of a half annulus to open the annular electric circuit to prevent the current from making a complete loop within the heat exchangers. The heat exchangers are located between the secondary winding and the core to reduce the heating from stray fields in the core gap into which the inductive charge coupler 16 is inserted. The fin pattern within the heat exchanger can be selected in accordance with the needs of the device. For large volume production, cast aluminum heat exchangers with pin fins can be utilized at a relatively low cost. Machined fins or dip-brazed offset fins can be used for smaller quantities.

For the transformer shown, the temperature of the secondary windings 30 and 32 is equal to the sum of the thermal resistance from the secondary winding to the fluid, multiplied by the heat dissipation. Without these heat exchangers, heat will have to be conducted to air outside of the core. The thermal conductivity of the ferrite core is typically in the order of 3,9 watt/m°C (0.1 watt/inch/C°). Given a planar area of the core of about 101,60 mm x 101,60 mm (4" x 4"), section thickness of 19,05 mm (0.75 inch) and power dissipation of 25 watts, the additional temperature rise through the core if the heat exchangers 38-44 are not used will be 11.8°C. By utilization of these heat exchangers, the elimination of that temperature rise will enable the same magnetic coupling to transfer more power or be reduced in size. The cooling of the secondary windings 30 and 32 also maintains the inductive charge coupler 16 at a lower temperature so that it is less likely to cause injury when it is removed.

The secondary windings 30 and 32 are electrically connected to vehicle batteries by busbars 50 and 52 and are connected together with busbar 54, shown in dashed lines.

The heat exchangers have their fluid inlets connected to a source of cooling fluid, such as coming from a convective and/or radiant heat exchanger when the fluid is a recirculated liquid or gas. A pump or fan will be employed to move the cooling fluid. Air may be used as the fluid in a closed or open system. The fluid outlets from the heat exchangers are connected to discharge the heated cooling fluid, which may pass through a cooling heat exchanger for reuse. In this way, a smaller, more efficient and more reliable magnetic coupling is achieved. This positioning of the heat exchanger does not affect the transformer performance because the primary current couples to the secondary current through flux coupling at the center core post. The added heat exchangers do not interrupt this flux coupling.

## Claims

1. An automobile charging transformer comprising:
a transformer primary inductive charge coupler (16) for attachment to a fixed alternating current power supply (12), said coupler (16) having a primary electric winding;
a transformer secondary inductive charge receptacle for mounting in the automobile (10) to charge the battery of the automobile (10), said transformer secondary inductive charge receptacle being sized to receive said coupler (16);
a transformer secondary winding (30, 32) arranged adjacent said receptacle; and
a magnetic core (20, 22, 24, 26, 34, 36) associated with said primary electric winding and said secondary electric winding (30, 32) to complete the magnetic circuit through said primary and secondary windings (30, 32) when said coupler (16) is in said receptacle, said transformer primary inductive charge coupler (16) being separable from said transformer secondary inductive charge receptacle so that the automobile (10) can depart from the fixed power supply (12),
characterized by
a heat exchanger (38-44) adjacent said secondary winding (30, 32), said heat exchanger (38-44) having a fluid passage therethrough and having connections (46, 48) for passing cooling fluid therethrough.

2. The automobile charging transformer of claim 1, characterized in that there are two secondary windings (30, 32), one on each side of said receptacle and there are two heat exchangers (38-44), one associated with each of said secondary windings (30, 32).

3. The automobile charging transformer of claim 2, characterized in that said heat exchangers (38-44) are located between said secondary winding (30, 32) and said core (20) to minimize stray current heating of said heat exchangers (38-44) .

4. The automobile charging transformer of claim 2 or claim 3, characterized in that said secondary windings (30, 32) are annular and said heat exchangers (38-44) are semi-annular.

5. The automobile charging transformer of claim 1, characterized in that said secondary winding (30, 32) is annular and said heat exchanger (38-44) is made up of two substantially semi-annular portions to prevent shorting out the transformer.

6. The automobile charging transformer of any of claims 1 - 5, characterized in that there is an annular secondary winding (30, 32) on each side of said transformer secondary inductive charge receptacle and there is a semi-annular pair of heat exchangers (38-44) lying against each said secondary winding (30, 32) on the side thereof away from said receptacle and said magnetic core (26) extends through said heat exchangers (38-44) and said secondary windings (30, 32).

7. The automobile charging transformer of any of claims 1 - 6, characterized by:
said primary electric winding being annular;
at least one annular secondary winding (30, 32) adjacent said receptacle being positioned to lie substantially against said inductive charge coupler (16) when said inductive charge coupler (16) is in charging position;
said heat exchanger (38-44) lying against said secondary winding (30, 32) on the side thereof away from said primary winding, said cooling fluid heat exchanger (38-44) being annular and divided into semi-annular portions (38-44), each of said portions (38-44) having a fluid inlet (46) and a fluid outlet (48) for connection to a cooling fluid supply; and
said magnetic core (20, 22, 24) extending through said annular heat exchanger (38-44) and through said annular secondary winding (30, 32).

8. An electric automobile having an electric propulsion motor and an electric battery connected to energize said propulsion motor and charging means for said battery so that said battery can be charged from a fixed power source (12) being connected to a transformer primary inductive charge coupler (16) having at least one transformer primary coil therein, comprising:
a transformer secondary inductive charge receptacle mounted on said automobile (10), said receptacle being sized such that the coupler (16) can be fitted within said receptacle;
an annular transformer secondary coil (30, 32) on at least one side of said receptacle so that said primary coil lies adjacent said secondary coil (30, 32) when said coupler (16) is fitted within said receptacle; and
magnetic core material (20, 22, 24, 26, 34, 36) associated with said primary and secondary coils (30, 32) to complete a magnetic circuit through said coils (30, 32) so that said coils (30, 32) are magnetically coupled when said inductive charge coupler (16) is positioned within said inductive charge receptacle,
characterized by
a heat exchanger (38-44) lying against said transformer secondary coil (30, 32) on the side thereof away from said receptacle, said heat exchanger (38-44) being formed of a plurality of partially annular portions (38-44), a heat exchanger fluid inlet (46) and a heat exchanger fluid outlet (48) on each of said portions (38-44) so that heat exchanger fluid can be circulated through each of said portions (38-44).

9. The electric automobile of claim 8, characterized in that there are two of said transformer secondary coils (30, 32), one on each side of said transformer secondary inductive charge receptacle, and there is a heat exchanger (38-44) lying against each said secondary transformer coils (30, 32) on the side thereof away from said receptacle, each of said heat exchangers (38-44) being formed of a plurality of parts (38-44) which are each a portion of an annulus.

10. The electric automobile of claim 8 or claim 9, characterized in that said core (20, 22, 24) extends through said heat exchangers (38-44) and through said secondary coils (30, 32) to terminate adjacent said receptacle and define said receptacle.

## Patentansprüche

1. Ladetransformator für ein Kraftfahrzeug, mit:
einem induktiven Ladekoppler (16) der Primärseite des Transformators, der dazu ausgelegt ist, mit einer feststehenden Wechselstrom-Spannungsversorgung (12) verbunden zu werden, wobei der Koppler (16) eine elektrische Primärwicklung aufweist;
einer induktiven Ladebuchse der Sekundärseite des Transformators, die dazu ausgelegt ist, in dem Kraftfahrzeug (10) montiert zu werden, um die Batterie des Kraftfahrzeugs (10) zu laden, wobei die induktive Ladebuchse der Sekundärseite des Transformators bezüglich ihrer Größe dazu ausgelegt ist, den Koppler (16) aufzunehmen;
einer Sekundärwicklung (30, 32) des Transformators, die benachbart der Buchse angeordnet ist; und
einem Magnetkern (20, 22, 24, 26, 34, 36), der der elektrischen Primärwicklung und der elektrischen Sekundärwicklung (30, 32) zugeordnet ist, um den magnetischen Kreis durch die Primär- und die Sekundärwicklung (30, 32) zu vervollständigen, wenn sich der Koppler (16) in der Buchse befindet, wobei der induktive Ladekoppler (16) der Primärseite des Transformators von der induktiven Ladebuchse der Sekundärseite des Transformators trennbar ist, so daß das Kraftfahrzeug (10) sich von der feststehenden Spannungsversorgung (12) entfernen kann,
gekennzeichnet durch
einen Wärmetauscher (38-44), der benachbart der Sekundärwicklung (30, 32) angeordnet ist und einen durch diesen verlaufenden Fluidkanal und Verbindungsglieder (46, 48) aufweist, um Kühlfluid durch diesen zu leiten.

2. Ladetransformator für ein Kraftfahrzeug nach Anspruch 1, dadurch gekennzeichnet, daß zwei Sekundärwicklungen (30, 32) vorhanden sind, die jeweils auf einer Seite der Buchse angeordnet sind, und daß zwei Wärmetauscher (38-44) vorhanden sind, die jeweils einer der Sekundärwicklungen (30, 32) zugeordnet sind.

3. Ladetransformator für ein Kraftfahrzeug nach Anspruch 2, dadurch gekennzeichnet, daß die Wärmetauscher (38-44) zwischen der Sekundärwicklung (30, 32) und dem Kern (20) angeordnet sind, um eine Streustromerwärmung der Wärmetauscher (38-44) zu minimieren.

4. Ladetransformator für ein Kraftfahrzeug nach Anspruch 2 oder Anspruch 3, dadurch gekennzeichnet, daß die Sekundärwicklungen (30, 32) ringförmig sind und daß die Wärmetauscher (38-44) halbringförmig sind.

5. Ladetransformator für ein Kraftfahrzeug nach Anspruch 1, dadurch gekennzeichnet, daß die Sekundärwicklung (30, 32) ringförmig ist und daß der Wärmetauscher (38-44) aus zwei im wesentlichen halbringförmigen Abschnitten besteht, um ein Kurzschließen des Transformators zu verhindern.

6. Ladetransformator für ein Kraftfahrzeug nach einem der Ansprüche 1 bis 5, dadurch gekennzeichnet, daß auf jeder Seite der induktiven Ladebuchse der Sekundärseite des Transformators eine ringförmige Sekundärwicklung (30, 32) vorhanden ist und daß ein Paar von halbringförmigen Wärmetauschern (38-44) jeweils an der Sekundärwicklung (30, 32) auf jener Seite von dieser liegt, die von der Buchse weg weist, und daß sich der Magnetkern (26) durch die Wärmetauscher (38-44) und die Sekundärwicklungen (30, 32) hindurch erstreckt.

7. Ladetransformator für ein Kraftfahrzeug nach einem der Ansprüche 1 bis 6, dadurch gekennzeichnet, daß:
die elektrische Primärwicklung ringförmig ist;
zumindest eine ringförmige Sekundärwicklung (30, 32) benachbart der Buchse positioniert ist, so daß sie im wesentlichen an dem induktiven Ladekoppler (16) liegt, wenn sich der induktive Ladekoppler (16) in einer Ladeposition befindet;
der Wärmetauscher (38-44) an der Sekundärwicklung (30, 32) auf jener Seite von dieser liegt, die von der Primärwicklung weg weist, wobei der Kühlfluid-Wärmetauscher (38-44) ringförmig und in zwei halbringförmige Abschnitte (38-44) unterteilt ist, wobei jeder dieser Abschnitte (38-44) einen Fluideinlaß (46) und einen Fluidauslaß (48) zur Verbindung mit einer Kühlfluidversorgungsquelle aufweist; und
der Magnetkern (20, 22, 24) sich durch den ringförmigen Wärmetauscher (38-44) und durch die ringförmige Sekundärwicklung (30, 32) hindurch erstreckt.

8. Elektrofahrzeug mit einem elektrischen Antriebsmotor und einer elektrischen Batterie, die angeschlossen ist, um den Antriebsmotor mit Energie zu versorgen, und mit einer Ladeeinrichtung für die Batterie, so daß die Batterie aus einer feststehenden Spannungsquelle (12) geladen werden kann, die mit einem induktiven Ladekoppler (16) der Primärseite eines Transformators verbunden ist, wobei der induktive Ladekoppler wenigstens eine Primärwickung des Transformators darin aufweist, mit:
einer induktiven Ladebuchse der Sekundärseite des Transformators, die an dem Fahrzeug (10) montiert ist, wobei die Buchse bezüglich ihrer Größe dazu ausgelegt ist, daß der Koppler (16) in die Buchse eingesetzt werden kann;
einer ringförmigen Sekundärwicklung (30, 32) des Transformators auf wenigstens einer Seite der Buchse, so daß die Primärwicklung benachbart zu der Sekundärwicklung (30, 32) liegt, wenn der Koppler (16) in die Buchse eingesetzt ist; und
Magnetkernmaterial (20, 22, 24, 26, 34, 36), das der Primär- und der Sekundärwicklung (30, 32) zugeordnet ist, um einen magnetischen Kreis durch die Wicklungen (30, 32) zu vervollständigen, so daß die Wicklungen (30, 32) magnetisch gekoppelt sind, wenn der induktive Ladekoppler (16) innerhalb der induktiven Ladebuchse angeordnet ist;
gekennzeichnet durch
einen Wärmetauscher (38-44), der an der Sekundärwicklung (30, 32) des Transformators auf jener Seite von dieser liegt, die von der Buchse weg zeigt, wobei der Wärmetauscher (38-44) aus einer Vielzahl von teilringförmigen Abschnitten (38-44) gebildet ist, wobei an jedem der Abschnitte (38-44) ein Fluideinlaß (46) des Wärmetauschers und ein Fluidauslaß (48) des Wärmetauschers vorgesehen sind, so daß Wärmetauscherfluid durch jeden der Abschnitte (38-44) zirkulieren kann.

9. Elektrofahrzeug nach Anspruch 8, dadurch gekennzeichnet, daß zwei Sekundärwicklungen (30, 32) des Transformators vorgesehen sind, die jeweils auf einer Seite der induktiven Ladebuchse der Sekundärseite des Transformators angeordnet sind, und daß an jeder der Sekundärwicklungen (30, 32) des Transformators ein Wärmetauscher (38-44) auf jener Seite von diesen liegt, die von der Buchse weg zeigt, wobei jeder der Wärmetauscher (38-44) aus einer Vielzahl von Teilen (38-44) gebildet ist, die jeweils einen Ringabschnitt bilden.

10. Elektrofahrzeug nach Anspruch 8 oder Anspruch 9, dadurch gekennzeichnet, daß der Kern (20, 22, 24) sich durch die Wärmetauscher (38-44) und durch die Sekundärwicklungen (30, 32) hindurch erstreckt, so daß er benachbart der Buchse endet und die Buchse definiert.

## Revendications

1. Transformateur de charge pour automobiles, comprenant:
un connecteur primaire (16) de charge par induction du transformateur destiné être relié à une source fixe (12) d'alimentation en courant alternatif, ledit connecteur (16) contenant un enroulement électrique primaire;
une prise secondaire de charge par induction du transformateur destiné à être installée dans le véhicule (10) en vue de charger la batterie du véhicule (10), ladite prise secondaire de charge par induction du transformateur étant dimensionnée de manière à recevoir ledit connecteur (16);
un enroulement secondaire (30, 32) de transformateur agencé de façon adjacente à ladite prise ; et
un noyau magnétique (20, 22, 24, 26, 34, 36) associé auxdits enroulements électriques primaire et secondaire (30, 32) de manière à compléter le circuit magnétique à travers lesdits enroulements primaire et secondaire (30, 32) lorsque ledit connecteur (16) est placé dans ladite prise, ledit connecteur primaire (16) de charge par induction du transformateur pouvant être séparé de ladite prise secondaire de charge par induction du transformateur, de manière que l'automobile (10) puisse partir de la source fixe (12) d'alimentation en courant,
caractérisé par un échangeur thermique (38 à 44) adjacent audit enroulement secondaire (30, 32), ledit échangeur thermique (38 à 44) comportant un passage de fluide traversant celui-ci, ayant des points de connexion (46, 48) permettant de faire passer du fluide de refroidissement à travers l'échangeur.

2. Transformateur de charge pour automobiles selon la revendication 1, caractérisé en ce que deux enroulements secondaires (30, 32) existent, un de chaque côté de la prise, et en ce que deux échangeurs thermiques (38 à 44) existent, dont un est associé à chacun desdits enroulements secondaires (30, 32).

3. Transformateur de charge pour automobiles selon la revendication 2, caractérisé en ce que lesdits échangeurs thermiques (38 à 44) sont logés entre ledit enroulement secondaire (30, 32) et ledit noyau (20), de manière à réduire à un minimum l'échauffement par courants parasites desdits échangeurs thermiques (38 à 44).

4. Transformateur de charge pour automobiles selon la revendication 2 ou la revendication 3, caractérisé en ce que lesdits enroulements secondaires (30, 32) sont annulaires, et en ce que lesdits échangeurs thermiques (38 à 44) sont semi-annulaires.

5. Transformateur de charge pour automobiles selon la revendication 1, caractérisé en ce que ledit enroulement secondaire (30, 32) est annulaire, et en ce que ledit échangeur thermique (38 à 44) est réalisé en deux parties essentiellement semi-annulaires, pour empêcher un court-circuit du transformateur.

6. Transformateur de charge pour automobiles selon l'une quelconque des revendications 1 à 5, caractérisé en ce qu'un enroulement secondaire annulaire (30, 32) est prévu de chaque côté de ladite prise secondaire de charge par induction du transformateur, et qu'une paire d'échangeurs thermiques semi-annulaires (38 à 44) est plaquée sur chacun desdits enroulements secondaires (30, 32), du côté de ceux-ci, qui est éloigné de ladite prise, et en ce que ledit noyau magnétique (26) s'étend à travers lesdits échangeurs thermiques (38 à 44) et lesdits enroulements secondaires (30, 32).

7. Transformateur de charge pour automobiles selon l'une quelconque des revendications 1 à 6, caractérisé en ce que:
ledit enroulement électrique primaire est annulaire;
au moins un enroulement secondaire annulaire (30, 32) adjacent à ladite prise est positionné de manière à se placer essentiellement en appui sur ledit connecteur de charge par induction (16) lorsque ledit connecteur de charge par induction (16) est en position de charge;
ledit échangeur thermique (38 à 44) s'appuie sur ledit enroulement secondaire (30, 32), du côté de celui-ci, qui est éloigné dudit enroulement primaire, ledit échangeur thermique (38 à 44) à fluide de refroidissement étant annulaire et divisé en parties semi-annulaires (38 à 44), chacune desdites parties (38 à 44) comportant une entrée (46) de fluide et une sortie (48) de fluide destinées à être raccordées sur une source d'alimentation en fluide de refroidissement; et en ce que
ledit noyau magnétique (20, 22, 24) s'étend à travers ledit échangeur thermique annulaire (38 à 44) et à travers ledit enroulement secondaire annulaire (30, 32).

8. Automobile électrique ayant un moteur de propulsion électrique et une batterie électrique branchée de manière à alimenter en courant ledit moteur de propulsion, et des moyens de charge pour ladite batterie, de manière que ladite batterie puisse être chargée à partir d'une source de courant fixe (12) reliée à un connecteur primaire (16) de charge par induction d'un transformateur, contenant au moins un bobinage primaire de transformateur, comprenant:
une prise secondaire de charge par induction du transformateur, installé dans ledit véhicule (10), ladite prise étant dimensionnée de manière que le connecteur (16) puisse être emboîté dans ladite prise ;
un bobinage secondaire annulaire (30, 32) du transformateur, disposé sur au moins un côté de ladite prise, de manière que ledit bobinage primaire soit adjacent audit bobinage secondaire (30, 32) lorsque ledit connecteur (16) est emboîté dans ladite prise ; et
une matière de noyau magnétique (20, 22, 24, 26, 34, 36) associée auxdits bobinages primaire et secondaire (30, 32) de manière à compléter le circuit magnétique à travers lesdits bobinages (30, 32), de façon que lesdits bobinages (30, 32) soient couplés de façon magnétique lorsque ledit connecteur (16) de charge par induction est positionné dans ladite prise de charge par induction,
caractérisée par un échangeur thermique (38 à 44) plaqué sur ledit bobinage secondaire (30, 32) dudit transformateur, du côté de celui-ci, qui est éloigné de ladite prise, ledit échangeur thermique (38 à 44) étant constitué de plusieurs parties (38 à 44) partiellement annulaires, une entrée (46) de fluide dans l'échangeur thermique et une sortie (48) de fluide de l'échangeur thermique étant respectivement prévues sur chacune desdites parties (38 à 44), de manière que le fluide d'échangeur thermique puisse circuler à travers chaque partie (38 à 44).

9. Automobile électrique selon la revendication 8, caractérisée en ce que deux desdits bobinages secondaires (30, 32) du transformateur sont prévus, un de chaque côté de ladite prise secondaire de charge par induction du transformateur, et en ce qu'un échangeur thermique (38 à 44) est prévu, qui est en appui sur chacun desdits bobinages secondaires (30, 32) du transformateur, du côté de celui-ci, qui est éloigné de ladite prise, chacun desdits échangeurs thermiques (38 à 44) étant constitué de plusieurs parties (38 à 44), qui se présentent toutes sous forme d'une partie d'anneau.

10. Automobile électrique selon la revendication 8 ou la revendication 9, caractérisée en ce que ledit noyau (20, 22, 24) s'étend à travers lesdits échangeurs thermiques (38 à 44) et à travers lesdits bobinages secondaires (30, 32) de manière à se terminer en contiguïté de ladite prise, et à définir ladite prise.
